# FASCICULE DE BREVET EUROPEEN

(11) **EP 2 401 675 B1**
(45) Date de publication et mention de la délivrance du brevet: **10.05.2017**
(21) Numéro de dépôt: 10708293.5
(22) Date de dépôt: 05.02.2010
(51) Int. Cl.: G06F 9/445

(54) **PROCEDE DE DIAGNOSTIC ET/OU DE MISE A JOUR D'UN LOGICIEL D'UN DISPOSITIF ELECTRONIQUE EQUIPE D'UN CONNECTEUR DE TYPE HDMI ET DISPOSITIF ASSOCIE**
VERFAHREN ZUM DIAGNOSTIZIEREN UND/ODER AKTUALISIEREN VON SOFTWARE EINES ELEKTRONISCHEN GERÄTS, DAS MIT EINEM VERBINDER DES HDMI-TYPS AUSGESTATTET IST UND DIESBEZÜGLICHES GERÄT
METHODS OF DIAGNOSIS AND/OR UPDATING OF SOFTWARE OF AN ELECTRONIC DEVICE EQUIPPED WITH A CONNECTOR OF HDMI TYPE AND ASSOCIATED DEVICE

(30) Priorité: 27.02.2009 FR 0951286
(43) Date de publication de la demande: 04.01.2012
(73) Titulaire: SAGEMCOM BROADBAND SAS, 92500 Rueil Malmaison (FR)
(72) Inventeur: REPELLIN, Olivier, F-92500 Rueil-Malmaison (FR)
(74) Mandataire: Camus, Olivier Jean-Claude
(86) Numéro de dépôt international: PCT/FR2010/050193
(87) Numéro de publication internationale: WO 2010/097533

(56) Documents cités:
- EP-A1- 1 519 304
- EP-A2- 0 201 001
- US-A- 6 124 938
- US-A1- 2005 120 384
- US-A1- 2006 200 813
- US-A1- 2006 211 328

## Description

### DOMAINE TECHNIQUE DE L'INVENTION

La présente invention a pour objet un procédé de diagnostic et/ou de mise à jour d'un logiciel installé dans un dispositif électronique, ledit dispositif électronique étant équipé au moins d'un connecteur de type connecteur HDMI. L'invention concerne également tout dispositif électronique apte à mettre en oeuvre le procédé selon l'invention. L'invention a essentiellement pour but de rendre possible les opérations de mise à jour et de diagnostic de logiciels embarqués dans des dispositifs électroniques présentant des interfaces audio-vidéo.

Le domaine de l'invention est, d'une façon générale, celui des dispositifs électroniques aptes à transmettre un contenu audio/vidéo. L'expression "transmission d'un contenu audio/vidéo" désigne d'une façon générale la transmission d'informations relatives à des images et/ou à des sons destinés à être restitués au moyen d'un appareil électronique tiers, par exemple un écran de télévision. Dans la description qui suit, on considérera, à titre d'exemple uniquement, un dispositif électronique de type décodeur de télévision numérique.

Actuellement, les décodeurs de télévision numérique sont susceptibles de disposer de plusieurs ports de communication pour échanger différentes informations avec des dispositifs tiers. Ces ports de communication peuvent par exemple être des ports série (de type RS232), des ports USB, des ports Ethernet ou encore des connecteurs péritels. Ces ports de communication peuvent en outre être utilisés dans des phases de production et/ou de maintenance pour échanger différentes informations avec le décodeur. Notamment, on utilise ces ports pour procéder à des opérations de diagnostic du logiciel installé au sein du décodeur, ou à des opérations de mise à jour de ce même logiciel. Le logiciel considéré est constitué de l'ensemble des applications permettant les différentes opérations afférentes au fonctionnement du dispositif électronique considéré. Dans le cas d'un décodeur, le logiciel gère notamment les opérations de contrôle de droits d'accès à différents services de télévision, les opérations de décodage desdits services, les opérations spécifiques de type gestion des menus...

### ARRIERE-PLAN TECHNOLOGIQUE DE L'INVENTION

Cependant, les ports de communication RS232 et Péritel qui viennent d'être évoqués tendent à disparaitre sur les nouveaux dispositifs électroniques aptes à transmettre un contenu vidéo. Le port USB est absent sur les dispositifs électroniques pour lesquels on cherche à limiter les coûts de production. En revanche, sur tous ces dispositifs électroniques, y compris sur les dispositifs électroniques peu couteux, un connecteur du type connecteur HDMI est de plus en plus souvent disponible.

Un connecteur HDMI (pour High Définition Multimedia Interface ; en français : Interface Multimédia Haute Définition) est un connecteur permettant la réalisation d'une interface audio/vidéo entièrement numérique, qui est utilisée pour transmettre habituellement des flux non compressés. Les interfaces HDMI permettent de connecter, avec un récepteur compatible - tel que par exemple un téléviseur Haute Définition - une source audio/vidéo d'un dispositif électronique - comme un lecteur Blu-Ray - ou un ordinateur ou une console de jeu. L'universalité des connecteurs HDMI vient essentiellement du fait qu'ils réalisent des interfaces supportant n'importe quel format de vidéo de la télévision haute définition, incluant la définition standard, la définition améliorée et la haute définition, ainsi que le son multi-canal, le tout au moyen d'un unique câble. Les connecteurs HDMI sont indépendants des différentes normes de transmission de la télévision numérique, qu'il s'agisse de télévision numérique terrestre ou de télévision numérique par satellite, par câble...

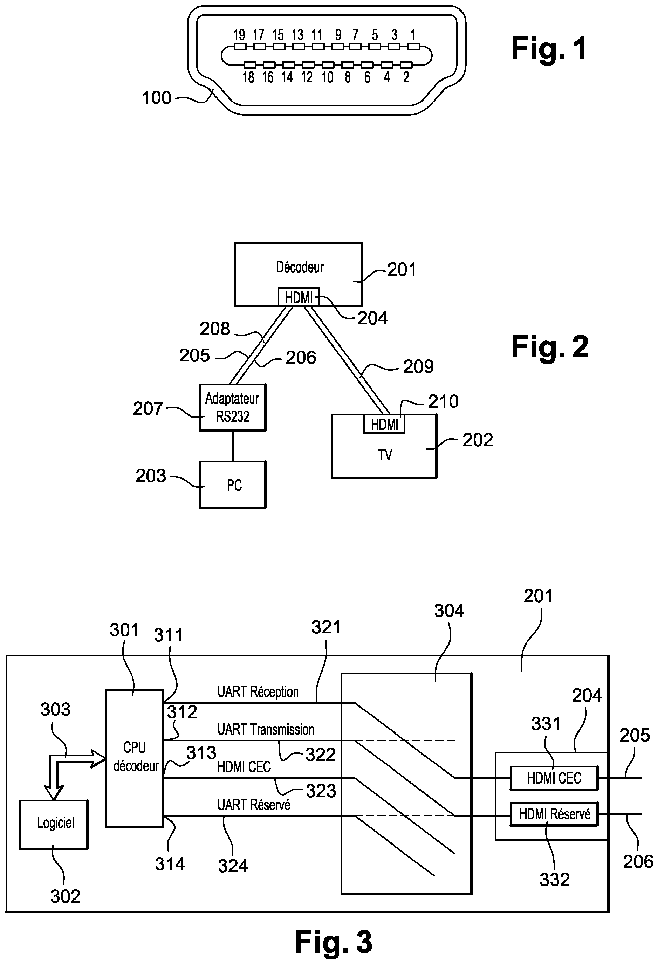

Un exemple de connecteur de type HDMI est illustré à la figure 1. Sur cette figure, un connecteur HDMI 100 est représenté ; il s'agit ici d'un connecteur de type A, qui est le connecteur HDMI le plus courant. Il existe également des connecteurs de type B et de type C, la mise en oeuvre de l'objet de l'invention étant possible avec n'importe quel type de connecteur HDMI.

Le connecteur 100 est une fiche femelle comportant 19 broches, référencées 1 à 19, dont la fonction est normalisée.

Ainsi, les broches 1 à 9 sont des broches dites TDMS (Transition Minimized Differential Signalling en anglais), permettant la transmission en série de données à très haute vitesse au travers d'un câble blindé. Chaque connecteur HDMI comporte trois canaux TDMS distincts, chaque canal faisant intervenir trois broches. Les broches 10, 11 et 12 sont des broches permettant la réalisation d'un canal d'horloge TDMS, afin de réaliser une temporalisation du flux de données circulant par les broches TDMS, et d'assurer ainsi l'intégrité des données transmises, même sur de longs câbles.

La broche 13 est une broche dite CEC (Consumer Electronics Control en anglais, pour contrôle "inter-éléments"). Cette broche est utilisée optionnellement. Elle permet d'ajouter plus de fonctionnalités à un système audio/vidéo. En outre, elle autorise par exemple à un dispositif électronique de communiquer avec un autre et de le contrôler : par exemple, en pressant une unique touche dite de "lecture universelle" sur une télécommande, un utilisateur peut activer tous les dispositifs électroniques nécessaires à la lecture d'un contenu, les informations de contrôle circulant par les broches CEC des différents dispositifs intervenant.

La broche 14 est une broche non utilisée à ce jour dans les différentes versions existantes de protocole HDMI. Elle est désignée comme broche réservée.

Les broches 15 et 16 sont respectivement des broches dites SCL et SDA.

La broche 17 est une broche dite DDC Channel, également appelée broche pour canal de données d'affichage. Elle permet notamment à un émetteur, par exemple une carte graphique, d'interroger un destinataire, par exemple un téléviseur haute définition équipé du connecteur HDMI 100, sur ses capacités d'affichage.

La broche 18 est une broche d'alimentation, portée au potentiel + 5 Volts.

La broche 19 est une broche dite HPD, qui permet une détection de prise rapide ; cette broche joue un rôle essentiel dans la détection des appareils compatibles avec les normes HDMI.

Les connecteurs HDMI du type de celui qui vient d'être décrit en référence à la figure 1 sont donc destinés à être présents sur la totalité des dispositifs électroniques destinés à des affichages video. Ils ne permettent cependant pas d'échanger des informations, relatives au diagnostic ou à la mise à jour d'un logiciel embarqué au sein du dispositif qu'ils équipent, avec un dispositif électronique tiers. Il n'existe ainsi, à ce jour, aucune solution pour procéder à des opérations de diagnostic ou de mise à jour de logiciel embarqué au sein d'un dispositif électronique équipé d'un connecteur HDMI, qui ne possède pas de connecteurs autres permettant de telles opérations.

### DESCRIPTION GENERALE DE L'INVENTION

Le procédé et le dispositif selon l'invention proposent une solution au problème qui vient d'être exposé. Dans l'invention, on propose une solution pour rendre possible, au travers du seul connecteur HDMI, un échange d'informations pour procéder à des opérations de diagnostic et/ou de mise à jour d'un logiciel embarqué d'un dispositif électronique apte à restituer des signaux audio et/ou vidéo. L'échange d'informations a lieu entre le dispositif équipé du connecteur HDMI et un dispositif électronique tiers adapté au diagnostic et/ou à la mise à jour du logiciel embarqué. A cet effet, on prévoit, dans l'invention, notamment une commutation de certaines liaisons, ou lignes, reliant le connecteur HDMI à un microcontrôleur du dispositif électronique équipé du logiciel embarqué

L'invention concerne donc essentiellement un procédé de diagnostic et/ou de mise à jour d'un logiciel embarqué, associé à un processeur au sein d'un premier dispositif électronique équipé d'un connecteur de type HDMI, caractérisé en ce que ledit procédé comporte les différentes étapes consistant à :
- relier, au moyen d'un câble adapté, un dispositif électronique tiers, apte à réaliser une opération de diagnostic ou de mise à jour du logiciel embarqué, avec une première broche et une deuxième broche du connecteur HDMI ;
- réaliser une opération de commutation du premier dispositif électronique, en faisant passer ledit premier dispositif électronique d'un premier mode, dit mode de fonctionnement habituel, à un deuxième mode, dit mode de transmission dans lequel le connecteur HDMI est apte, via la première broche et la deuxième broche, à échanger des informations vers le, et en provenance du, processeur ; ladite opération de commutation comportant les différentes opérations consistant à
- basculer une première liaison, reliant dans le mode de fonctionnement habituel un premier port du processeur, dédié à la réception de données, à un port série du premier dispositif électronique ou à un port non utilisé, de manière que ladite première liaison relie, dans le mode de transmission, ledit premier port du processeur à ladite première broche du connecteur HDMI ;

- basculer une deuxième liaison, reliant dans le mode de fonctionnement habituel un deuxième port du processeur, dédié à la transmission de données, à un port série du premier dispositif électronique ou à un port non utilisé, de manière que ladite deuxième liaison relie, dans le mode de transmission, ledit deuxième port du processeur à ladite deuxième broche du connecteur HDMI.
   - procéder, via le câble adapté, à des échanges d'informations entre le premier dispositif électronique et le dispositif électronique tiers, pour réaliser l'opération de diagnostic et/ou de mise à jour du logiciel embarqué.

Le procédé selon l'invention peut comporter, en plus des caractéristiques principales qui viennent d'être mentionnées dans le paragraphe précédent, une ou plusieurs caractéristiques supplémentaires parmi les suivantes:
- la première broche du connecteur HDMI est la broche dite broche CEC, et en ce que la deuxième broche du connecteur HDMI est la broche dite réservée.
- l'opération de commutation est réalisée suite à la réception par le premier dispositif électronique d'une commande spécifique, notamment une commande émise au moyen d'une télécommande associée audit premier dispositif, ou une commande correspondant à un appui sur une touche, ou sur une combinaison de touches, présentes sur ledit premier dispositif.
- le procédé comporte l'étape supplémentaire consistant à réaliser une opération de commutation du premier dispositif électronique en le faisant passer du mode de transmission au mode de fonctionnement habituel suite à la réception, au cours de l'opération de diagnostic ou de l'opération de mise à jour du logiciel embarqué, d'une commande spécifique émise par le dispositif électronique tiers via le câble adapté.

Les différentes caractéristiques supplémentaires du procédé selon l'invention, dans la mesure où elles ne s'excluent pas mutuellement, sont combinées selon toutes les possibilités d'association pour aboutir à différents exemples de mise en oeuvre de l'invention.

La présente invention se rapporte également à un dispositif électronique équipé d'un connecteur de type HDMI apte à mettre en oeuvre le procédé selon l'invention, ledit dispositif comportant un logiciel embarqué associé à un processeur, ledit logiciel embarqué devant faire l'objet d'une opération de diagnostic et/ou de mise à jour caractérisé en ce que ledit dispositif comporte un moyen de commutation pour réaliser :
- le basculement d'une première liaison, reliant dans un premier mode de fonctionnement, dit mode de fonctionnement habituel, un premier port du processeur, dédié à la réception de données, à un port série ou à un port non utilisé dudit dispositif électronique, de manière que ladite première liaison relie, dans un deuxième mode de fonctionnement, dit mode de transmission, ledit premier port du processeur à une première broche du connecteur HDMI ;
- le basculement d'une deuxième liaison, reliant dans le mode de fonctionnement habituel un deuxième port du processeur, dédié à la transmission de données, à un port série ou à un port non utilisé dudit dispositif électronique, de manière que ladite deuxième liaison relie, dans le mode de transmission, ledit deuxième port du processeur à ladite deuxième broche du connecteur HDMI.

Le dispositif selon l'invention peut comporter, en plus des caractéristiques principales qui viennent d'être mentionnées dans le paragraphe précédent, la caractéristique supplémentaire selon laquelle dans le mode de transmission, le premier port du processeur est relié à la broche du connecteur HDMI dite broche CEC, et dans le mode de transmission le deuxième port du processeur est relié à la broche du connecteur HDMI dite broche réservée.

L'invention et ses différentes applications seront mieux comprises à la lecture de la description qui suit et à l'examen des figures qui l'accompagnent.

### BREVE DESCRIPTION DES FIGURES

Celles-ci ne sont présentées qu'à titre indicatif, et nullement limitatif de la portée de l'objet de la présente invention. Les figures montrent :
- à la figure 1, déjà décrite, une représentation d'un connecteur femelle HDMI de type A ;
- à la figure 2, une représentation schématique des différents éléments matériels intervenant dans un exemple de mise en oeuvre du procédé selon l'invention ;
- à la figure 3, un diagramme électronique interne d'un dispositif selon l'invention ;
- à la figure 4, un diagramme de fonctionnement lors d'une opération de mise à jour du dispositif selon l'invention ;
- à la figure 5, un diagramme de fonctionnement lors d'une opération de diagnostic du dispositif selon l'invention.

### DESCRIPTION DES FORMES DE REALISATION PREFEREES DE L'INVENTION

Sauf précision contraire, les différents éléments apparaissant sur différentes figures conservent les mêmes références.

A la figure 2, on a représenté un dispositif électronique 201 selon l'invention, dans cet exemple de type décodeur de télévision numérique, qui échange des informations avec un téléviseur 202 et un dispositif électronique tiers 203, de type ordinateur personnel ; les différentes informations sont issues du décodeur 201 par un connecteur HDMI 204 du type de celui représenté à la figure 1. Selon l'invention, afin de réaliser des opérations de diagnostic et/ou de mise à jour d'un logiciel embarqué dans le décodeur 201, une première liaison 205, respectivement une deuxième liaison 206, relie une première broche, respectivement une deuxième broche, à l'ordinateur personnel par l'intermédiaire d'un équipement intermédiaire de type adaptateur RS232 permettant de réaliser l'interface entre les deux liaisons 205 et 206 et un connecteur série de type RS232 de l'ordinateur personnel 203. La première liaison 205 et la deuxième liaison 206 constitue un câble adapté 208 permettant un échange d'informations entre le décodeur 201 et l'ordinateur personnel 203 pour les opérations de mise à jour et/ou de diagnostic du logiciel embarqué dans le décodeur 201.

Dans le connecteur HDMI 204, les broches, autres que les broches reliées par les liaisons 205 et 206 à l'adaptateur 207, sont reliées par un câble de diffusion 209 aux broches d'un deuxième connecteur HDMI 210 présent au niveau du téléviseur 202. En choisissant judicieusement la première broche et la deuxième broche, comme il le sera détaillé dans la suite de la description, le câble de diffusion 209 permet un fonctionnement habituel du téléviseur 202 recevant des signaux depuis le décodeur 201, tout en réalisant des opérations de diagnostic et/ou de mise à jour du logiciel embarqué du décodeur 201. Une fois que les opérations de diagnostic et/ou de mise à jour dudit logiciel sont achevées, les câbles 208 et 209 peuvent être remplacés par un unique câble habituellement utilisé pour relier le décodeur 201 au téléviseur 202 par l'intermédiaire de connecteurs HDMI.

La figure 3 illustre un exemple de mise en oeuvre du procédé selon l'invention. Sur cette figure, on a représenté schématiquement, au sein du décodeur 201, un processeur 301 associé à un logiciel embarqué 302. Le processeur 301 échange des informations avec le logiciel embarqué 302 via un bus de communication bidirectionnel 303.

Dans l'invention, le décodeur 201 est apte à passer d'un premier mode, dit mode de fonctionnement habituel, à un deuxième mode, dit mode de transmission, et vice-versa.

Dans le mode de fonctionnement habituel, les différents ports du processeur 301 sont affectés selon un fonctionnement habituel de l'état de la technique. Ainsi, dans le mode de fonctionnement habituel, un premier port 311 du processeur 301 dédié à la réception de données, est relié, par une première liaison 321, à un port dédié d'un connecteur série non représenté, par exemple de type RS232. Dans le mode de fonctionnement habituel, un deuxième port 312 du processeur 301 dédié à la transmission de données, est relié, par une deuxième liaison 322, à un port dédié d'un connecteur série non représenté, par exemple de type RS232. Dans le cas de décodeurs bas de gamme qui ne possèdent pas de connecteurs série, la première liaison 321 et la deuxième liaison 322 sont reliées à des ports non utilisés.

Dans le mode de transmission, le premier port 311 du processeur 301 dédié à la réception de données, est relié, par la première liaison 321, à une première broche 331 de connexion du connecteur HDMI 204. Dans le mode de transmission, le deuxième port 312 du processeur 301 dédié à la transmission de données, est relié, par la deuxième liaison 322, à une deuxième broche 332 de connexion du connecteur HDMI 204. Avantageusement, le port 311 est un port de type UART (Universal Asynchronous Receiver Transmitter en anglais, pour émetteur-récepteur asynchrone universel) de réception du processeur 301, et le port 312 est un port de type UART de transmission du processeur 301. Avantageusement, la première broche de connexion est la broche CEC, et la deuxième broche de connexion est la broche réservée du connecteur HDMI. Un tel choix dans les broches de connexion du connecteur HDMI 204 pour réaliser le mode de transmission permet un fonctionnement habituel du téléviseur 202 recevant des signaux depuis le décodeur 201, tout en réalisant des opérations de diagnostic et/ou de mise à jour du logiciel embarqué du décodeur 201.

Le passage du mode de fonctionnement habituel au mode de transmission, et inversement le passage du mode de transmission au mode de fonctionnement habituel, est effectué par une opération de commutation réalisée par un dispositif de commutation 304, contrôlé par le processeur 301, qui assure le passage de la première liaison 321 et de la deuxième liaison 322 d'une première position, représentée au pointillé et correspondant au mode de fonctionnement habituel, à une deuxième position, représentée en traits gras et correspondant au mode de transmission. Lorsque le décodeur 201 est placé dans le mode de transmission, une troisième liaison 323, respectivement une quatrième liaison 324, reliant dans le mode de fonctionnement habituel un port 313, respectivement un port 314, du processeur 301 à la broche CEC 331, respectivement à la broche réservée 332, du connecteur HDMI 204 sont déconnectées de ces dites broches.

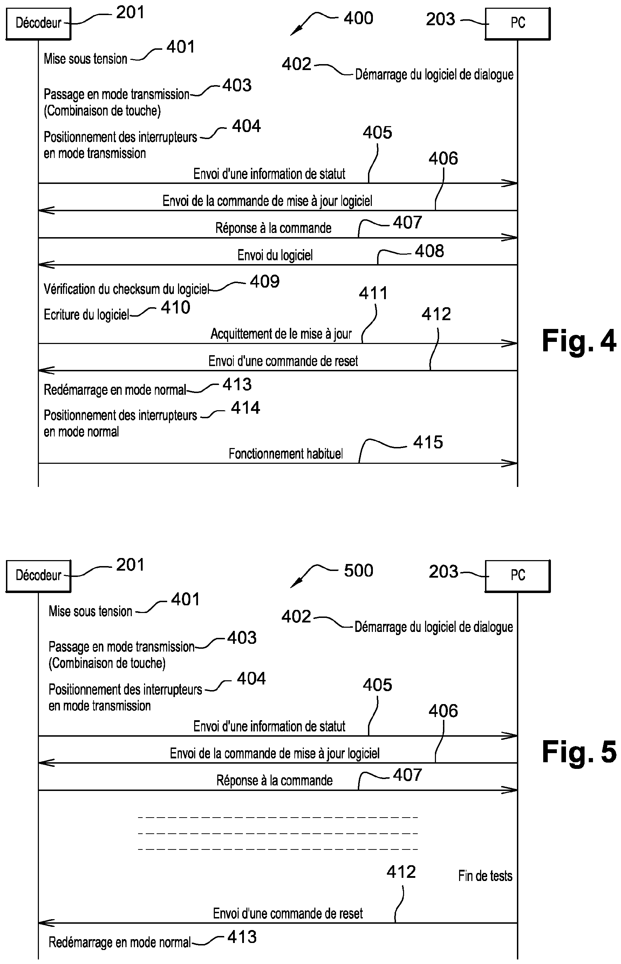

A la figure 4, on a représenté les différentes étapes, entre le décodeur 201 et l'ordinateur personnel 203, d'une opération 400 de mise à jour du logiciel embarqué 302 selon un exemple de mise en oeuvre du procédé selon l'invention.

Ainsi on a représenté les différentes étapes successives suivantes :
- Opération 401 de mise sous tension du décodeur 201 et démarrage 402, dans l'ordinateur personnel 203, d'un logiciel de dialogue entre le décodeur 201 et l'ordinateur 203 ;
- Passage 403 dans le mode de transmission suite par exemple à la réception d'une commande particulière émise par une télécommande du décodeur 201, ou suite à l'identification d'un appui sur une ou plusieurs touches présentes sur le décodeur 201 ;
- Commutation 404 du dispositif de commutation 304, se traduisant par un positionnement d'interrupteurs dans une position précédemment décrite correspondant au mode de transmission ;
- Envoi 405 depuis le décodeur 201 vers l'ordinateur 203 d'une information de statut indiquant à l'ordinateur 203 le passage en mode de transmission ;
- Envoi 406 depuis l'ordinateur 203 vers le décodeur 201 d'une commande de mise à jour du logiciel embarqué initiant la mise à jour du logiciel ;
- Envoi 407 depuis le décodeur 201 vers l'ordinateur 203 d'une réponse à la commande précédente, indiquant que le décodeur 201 est prêt à recevoir le logiciel mis à jour dans sa totalité ;
- Envoi 408 depuis l'ordinateur 203 vers le décodeur 201 du logiciel mis à jour ;
- Vérification 409, au sein du décodeur 201, de l'intégrité des données reçues, notamment par des calculs de type CRC ;
- Ecriture 410 du logiciel mis à jour dans une mémoire morte (mémoire flash, disque dur...) du décodeur 201 ;
- Envoi 411 depuis le décodeur 201 vers l'ordinateur 203 d'une information d'acquittement de l'opération de mise à jour du logiciel ;
- Envoi 412 depuis l'ordinateur 203 vers le décodeur 201 d'une commande de réinitialisation du décodeur 201 ;
- Redémarrage 413 du décodeur 201 en mode de fonctionnement habituel ;
- Basculement du dispositif de commutation pour un repositionnement 414 des interrupteurs dans la position correspondant au mode de fonctionnement habituel, et reprise du fonctionnement habituel du décodeur 201.

A la figure 5, on a représenté les différentes étapes, entre le décodeur 201 et l'ordinateur personnel 203, d'une opération 500 de diagnostic du logiciel embarqué 302 selon un exemple de mise en oeuvre du procédé selon l'invention.

L'ensemble des étapes qui viennent d'être décrites sont reprises dans l'opération de diagnostic décrite, à l'exception des étapes 408 à 411. Dans la pratique, en effet, l'opération de mise à jour du logiciel est un cas particulier de l'opération de diagnostic, dans laquelle une étape 406' d'envoi depuis l'ordinateur 203 vers le décodeur 201 d'une commande générique, permettant de tester le fonctionnement du décodeur, remplace la commande de mise à jour du logiciel embarqué précédemment mentionnée.

Le mode diagnostic permet notamment de prendre connaissance, au sein de l'ordinateur 203, des informations relatives à l'état du décodeur 201 (numéro de série, état du verrouillage de la mémoire flash, verrouillage du JTAG, activation ou non du cryptocore....).

## Revendications

1. Dispositif électronique (201), apte à restituer des signaux audio et/ou vidéo, équipé d'un connecteur de type HDMI (204), ledit dispositif étant apte à mettre en oeuvre, via le connecteur de type HDMI, un procédé de diagnostic (500) et/ou de mise à jour (400) d'un logiciel embarqué (302), ledit dispositif (201) comportant ledit logiciel embarqué (302) associé à un processeur (301), **caractérisé en ce que** ledit dispositif (201) comporte un moyen de commutation (304) pour réaliser :
- le basculement d'une première liaison (321), reliant dans un premier mode de fonctionnement, dit mode de fonctionnement habituel, un premier port (311) du processeur (301), dédié à la réception de données, à un port série ou à un port non utilisé dudit dispositif électronique, de manière que ladite première liaison (321) relie, dans un deuxième mode de fonctionnement, dit mode de transmission, ledit premier port (311) du processeur (301) à une première broche (331) du connecteur HDMI (204), ladite première broche (331) du connecteur HDMI (204) étant une broche de type CEC;
- le basculement d'une deuxième liaison (322), reliant dans le mode de fonctionnement habituel un deuxième port (312) du processeur (301), dédié à la transmission de données, à un port série ou à un port non utilisé dudit dispositif électronique, de manière que ladite deuxième liaison (322) relie, dans le mode de transmission, ledit deuxième port (312) du processeur (301) à une deuxième broche (332) du connecteur HDMI (204), ladite deuxième broche (332) du connecteur HDMI (204) étant une broche de type broche réservée.

2. Dispositif électronique (201) selon la revendication 1 **caractérisé en ce qu'**il est de type décodeur de télévision numérique.

3. Procédé, mis en oeuvre par le dispositif selon l'une quelconque des revendications précédentes, de diagnostic (500) et/ou de mise à jour (400) d'un logiciel embarqué (302), associé à un processeur (301) au sein d'un premier dispositif électronique (201) apte à restituer des signaux audio et/ou vidéo et équipé d'un connecteur (204) de type HDMI, **caractérisé en ce que** ledit procédé est mis en oeuvre via le connecteur de type HDMI et comporte les différentes étapes consistant à :
- relier, au moyen d'un câble adapté (208), un dispositif électronique tiers (203), apte à réaliser une opération de diagnostic ou de mise à jour du logiciel embarqué (302), avec une première broche (331) et une deuxième broche (332) du connecteur HDMI (204), la première broche (331) étant de type CEC, et la deuxième broche (332) étant de type broche réservée ;
- réaliser une opération (403) de commutation du premier dispositif électronique (201), en faisant passer ledit premier dispositif électronique (201) d'un premier mode, dit mode de fonctionnement habituel, à un deuxième mode, dit mode de transmission dans lequel le connecteur HDMI (204) est apte, via la première broche (331) et la deuxième broche (332), à échanger des informations vers le, et en provenance du, processeur (301) ; ladite opération de commutation comportant les différentes opérations consistant à
- basculer une première liaison (321), reliant dans le mode de fonctionnement habituel un premier port (311) du processeur (301), dédié à la réception de données, à un port série du premier dispositif électronique ou à un port non utilisé, de manière que ladite première liaison (321) relie, dans le mode de transmission, ledit premier port (311) du processeur (301) à ladite première broche (331) du connecteur HDMI (204) ;
- basculer une deuxième liaison (322), reliant dans le mode de fonctionnement habituel un deuxième port (312) du processeur (301), dédié à la transmission de données, à un port série du premier dispositif électronique ou à un port non utilisé, de manière que ladite deuxième liaison (322) relie, dans le mode de transmission, ledit deuxième port (312) du processeur (301) à ladite deuxième broche (332) du connecteur HDMI (204).
- procéder, via le câble adapté (208), à des échanges d'informations entre le premier dispositif électronique (201) et le dispositif électronique tiers (203), pour réaliser l'opération de diagnostic et/ou de mise à jour du logiciel embarqué (302).

4. Procédé selon la revendication 3 **caractérisé en ce que** l'opération de commutation est réalisée suite à la réception par le premier dispositif électronique (201) d'une commande spécifique, notamment une commande émise au moyen d'une télécommande associée audit premier dispositif électronique, ou une commande correspondant à un appui sur une touche, ou sur une combinaison de touches, présentes sur ledit premier dispositif électronique.

5. Procédé selon l'une au moins des revendications 3 à 4 **caractérisé en ce qu'**il comporte l'étape supplémentaire consistant à réaliser une opération (414) de commutation du premier dispositif électronique (201) en le faisant passer du mode de transmission au mode de fonctionnement habituel suite à la réception, au cours de l'opération de diagnostic ou de l'opération de mise à jour du logiciel embarqué, d'une commande spécifique émise par le dispositif électronique tiers (203) via le câble adapté (208).

## Patentansprüche

1. Elektrische Vorrichtung (201) die geeignet ist, Audio- und / oder Funksignale wiederzugeben, die mit einem Anschluss vom Typ HDMI (204) ausgerüstet ist, wobei die genannte Vorrichtung geeignet ist, über den Anschluss vom Typ HDMI ein Diagnoseverfahren (500) und / oder ein Aktualisierungsverfahren (400) einer integrierten Software (302) umzusetzen, wobei die genannte Vorrichtung (201) die genannte integrierte Software (302) umfasst, die einem Prozessor (301) zugeordnet ist, **dadurch gekennzeichnet, dass** die genannte Vorrichtung (201) ein Schaltmittel (304) umfasst, um zu realisieren:
- Umschalten einer ersten Verbindung (321), die in einem ersten Betriebsmodus, bezeichnet als üblicher Betriebsmodus, einen ersten Port (311) des Prozessors (301), der für den Datenempfang dediziert ist, an einen Serienport oder einen nicht verwendeten Port der genannten elektronischen Vorrichtung derart anschließt, dass die genannte erste Verbindung (321) in einem zweiten Betriebsmodus, bezeichnet als Übertragungsmodus, den genannten ersten Port (311) des Prozessors (301) an einen ersten Stift (331) des Anschlusses HDMI (204) anschließt, wobei der genannte erste Stift (331) des Anschlusses HDMI (204) ein Stift vom Typ CEC ist;
- Umschalten einer zweiten Verbindung (322), die in dem üblichen Betriebsmodus einen zweiten Port (312) des Prozessors (301), der für die Datenübertragung dediziert ist, einen Serienport oder einen nicht verwendeten Port der elektronischen Vorrichtung derart anschließt, dass die genannte zweite Verbindung (322) im Übertragungsmodus den genannten zweiten Port (312) des Prozessors (301) an einen zweiten Stift (322) des Anschlusses HDMI (3024) anschließt, wobei der genannte zweite Stift (332) des Anschlusses HDMI (204) ein Stift vom Typ reservierter Stift ist.

2. Elektronische Vorrichtung (201) gemäß Anspruch 1, **dadurch gekennzeichnet, dass** sie vom Typ digitaler Fernsehdecoder ist.

3. Verfahren, das von der Vorrichtung gemäß irgendeinem der voranstehenden Ansprüche umgesetzt wird, zur Diagnose (500) und / oder Aktualisierung (400) einer integrierten Software (302), die einem Prozessor (301) innerhalb einer ersten elektronischen Vorrichtung (201) zugeordnet ist und geeignet ist, Audio- und / oder Videosignale wiederzugeben und mit einem Anschluss (204) vom Typ HDMI ausgerüstet ist, **dadurch gekennzeichnet, dass** das genannte Verfahren über den Anschluss vom Typ HDMI umgesetzt ist und die unterschiedlichen Schritte umfasst, bestehend aus:.
- Mittels eines geeigneten Kabels (208) Anschließen einer elektronischen dritten Vorrichtung (203), die geeignet ist, eine Diagnose- oder Aktualisierungsoperation der integrierten Software (302) mit einem ersten Stift (331) und einem zweiten Stift (332) des Anschlusses HDMI (204) zu realisieren, wobei der erste Stift (331) vom Typ CEC ist und der zweite Stift (332) vom Typ reservierter Stift ist;
- Realisieren einer Schaltoperation (403) der ersten elektronischen Vorrichtung (201), indem die genannte erste elektronische Vorrichtung (201) von einem ersten Modus, bezeichnet als üblicher Betriebsmodus, in einen zweiten Modus, bezeichnet als Übertragungsmodus, geschaltet wird, in dem der Anschluss HDMI (204) geeignet ist, über den ersten Stift (331) und den zweiten Stift (332) Informationen zu dem und aus dem Prozessor (301) auszutauschen; wobei die genannte Schaltoperation die unterschiedlichen Operationen umfasst, bestehend aus:
- Umschalten einer ersten Verbindung (321), die in dem üblichen Betriebsmodus einen ersten Port (311) des Prozessors (301), der für den Datenempfang dediziert ist, an einen Serienport der ersten elektronischen Vorrichtung oder an einen nicht verwendeten Port derart anschließt, dass die genannte erste Verbindung (321) den genannten ersten Port (311) des Prozessors (301) im Übertragungsmodus an den genannten ersten Stift (331) des Anschlusses HDMI (204) anschließt;
- Umschalten einer zweiten Verbindung (332), die in dem üblichen Betriebsmodus einen zweiten Port (312) des Prozessors (301), der für die Datenübertragung dediziert ist, an einen Serienport der elektronischen Vorrichtung oder einen nicht verwendeten Port derart anschließt, dass die genannte zweite Verbindung (322) im Übertragungsmodus den genannten zweiten Port (312) des Prozessors (301) an den genannten zweiten Stift (332) des Anschlusses HDMI (204) anschließt;
- Über das geeignete Kabel (208) Vornahme eines Datenaustauschs zwischen der ersten elektronischen Vorrichtung (201) und der dritten elektronischen Vorrichtung (203) zur Realisierung der Diagnoseoperation und / oder der Aktualisierung der integrierten Software (302).

4. Verfahren gemäß Anspruch 3, **dadurch gekennzeichnet, dass** die Schaltoperation im Anschluss an den Empfang eines spezifischen Befehls, insbesondere eines mittels einer Fernbedingung ausgegebenen Befehls, die der ersten elektronischen Vorrichtung zugeordnet ist, oder eines Befehls, der einem Drücken auf eine Taste oder auf eine Kombination von Tasten entspricht, die auf der genannten ersten elektronischen Vorrichtung vorhanden sind, durch die erste elektronische Vorrichtung (201) realisiert wird.

5. Verfahren gemäß wenigstens einem der Ansprüche 3 bis 4, **dadurch gekennzeichnet, dass** es den zusätzlichen Schritt umfasst, bestehend aus der Realisierung einer Schaltoperation (414) der ersten elektronischen Vorrichtung (201), indem es im Anschluss an den Empfang im Verlauf der Diagnoseoperation oder der Aktualisierungsoperation der integrierten Software eines spezifischen Befehls, der von der dritten elektronischen Vorrichtung (203) über das geeignete Kabel (208) ausgegeben wird, vom Übertragungsmodus in den üblichen Betriebsmodus geschaltet wird.

## Claims

1. Electronic device (201), able to restore audio and/or video signals, provided with a connector of the HDMI type (204), said device able to implement, via the connector of the HDMI type, a method of diagnosis (500) and/or of updating (400) embedded software (302), said device (201) comprising said embedded software (302) associated with a processor (301),
**characterised in that** said device (201) comprises a means for switching (304) in order to carry out:
- the switching of a first link (321), connecting in a first operating mode, referred to as normal operation mode, a first port (311) of the processor (301), dedicated to receiving data, to a serial port or to an unused port of said electronic device, in such a way that said first link (321) connects, in a second operating mode, referred to as transmission mode, said first port (311) of the processor (301) to a first pin (331) of the HDMI connector (204), said first pin (331) of the HDMI connector (204) being a pin of the CEC type;
- the switching of a second link (322), connecting in the normal operating mode a second port (312) of the processor (301), dedicated to transmitting data, to a serial port or to an unused port of said electronic device, in such a way that said second link (322) connects, in the transmission mode, said second port (312} of the processor (301} to a second pin (332) of the HDMI connector (204), said second pin (332) of the HDMI connector (204) being a pin of the reserved pin type.

2. Electronic device (201) according to claim 1 **characterised in that** it is of the digital television decoder type.

3. Method, implemented by the device as claimed in any preceding claim, for diagnosing (500) and/or updating (400) embedded software (302), associated with a processor (301) within a first electronic device (201) able to restore audio and/or video signals and provided with a connector (204) of the HDMI type, **characterised in that** said method is implemented via the connector of the HDMI type and comprises the various steps consisting in:
- connecting, using a suitable cable (208), a third-party electronic device (203), able to carry out an operation of diagnosis or of updating the embedded software (302), to a first pin (331) and a second pin (332) of the HDMI connector (204), with the first pin (331) being of the CEC type, and the second pin (332) being of the reserved pin type;
- carrying out an operation (403) of switching of the first electronic device (201), by toggling said first electronic device (201) from a first mode, referred to as normal operation, to a second mode, referred to as transmission mode in which the HDMI connector (204) is able, via the first pin (331) and the second pin (332), to exchange information to, and from, the processor (301); said operation of switching comprising the various operations consisting in
- switching a first link (321), connecting in the normal operation mode a first port (311) of the processor (301), dedicated to receiving data, to a serial port of the first electronic device or to an unused port, in such a way that said first link (321) connects, in the transmission mode, said first port (311) of the processor (301) to said first pin (331) of the HDMI connector (204);
- switching a second link (322), connecting in the normal operation mode a second port (312) of the processor (301), dedicated to data transmission, to a serial port of the first electronic device or to an unused port, in such a way that said second link (322) connects, in the transmission mode, said second port (312) of the processor (301) to said second pin (332) of the HDMI connector (204).
- undertaking, via the suitable cable (208), exchanges of information between the first electronic device (201) and the third-party electronic device (203), in order to carry out the operation of diagnosis and/or of updating the embedded software (302).

4. Method according to claim 3 **characterised in that** the operation of switching is carried out following the reception by the first electronic device (201) of a specific command, in particular a command emitted by means of a remote control associated with said first electronic device, or a command corresponding to a press on a button, or on a combination of buttons, present on said first electronic device.

5. Method according to at least one of the claims 3 to 4 **characterised in that** it comprises the additional step consisting in carrying out an operation (414) of switching of the first electronic device (201) by toggling it from the transmission mode to the normal operation mode following the reception, during the operation of diagnosing or the operation of updating the embedded software, of a specific command emitted by the third-party electronic device (203) via the suitable cable (208).
